# EUROPEAN PATENT APPLICATION

(11) **EP 4 585 430 A1**
(43) Date of publication of application: **16.07.2025**
(21) Application number: 23862877.0
(22) Date of filing: 10.08.2023
(51) Int. Cl.: B60C 13/00, B60C 19/00

(54) **PNEUMATIC TIRE**

(30) Priority: 05.09.2022 JP 2022141055
(71) Applicant: BRIDGESTONE CORPORATION, Chuo-ku Tokyo 104-8340 (JP)
(72) Inventor: ONO Takatoshi, Tokyo 104-8340 (JP)
(74) Representative: Marks & Clerk LLP
(86) International application number: PCT/JP2023/029352
(87) International publication number: WO 2024/053337

(57) **Abstract**

A pneumatic tire including: a tire body including a tire side portion whose outer surface is composed of side-covering rubber; a communication device embedded in the tire side portion of the tire body. When a region in which the communication device is located in the tire radial direction and the tire circumferential direction of the tire side portion is defined as a device region, the outer surface of the tire side portion protrudes in the device region, and thickness of the side-covering rubber is thinner in the device region than around the device region.

## Description

### TECHNICAL FIELD

The present disclosure relates to a pneumatic tire.

### BACKGROUND

Pneumatic tires having communication devices such as RF tags embedded inside are known. Patent Literature (PTL) 1 describes such a pneumatic tire.

### CITATION LIST

### Patent Literature

PTL 1: JP 2004-148953 A

### SUMMARY

### (Technical Problem)

Identifying the location of a communication device embedded inside a tire body from outside a pneumatic tire is difficult. Therefore, as in the pneumatic tire described in PTL 1, a protrusion may be provided as an indicator to externally indicate the location of the communication device. However, a protrusion as an indicator may be damaged, torn off, or the like, due to various impacts from outside the pneumatic tire.

It would be helpful to provide a pneumatic tire capable of improving durability of a portion that protrudes to indicate the location of a communication device.

### (Solution to Problem)

A pneumatic tire as a first aspect of the present disclosure is
(1)
   a pneumatic tire comprising:
   a tire body including a tire side portion whose outer surface is composed of side-covering rubber; and
   a communication device embedded in the tire side portion of the tire body, wherein
   when a region in which the communication device is located in the tire radial direction and the tire circumferential direction of the tire side portion is defined as a device region,
   the outer surface of the tire side portion protrudes in the device region, and
   thickness of the side-covering rubber is thinner in the device region than around the device region.

A pneumatic tire as an embodiment of the present disclosure is
(2)
the pneumatic tire according to (1), above, wherein maximum protrusion of the outer surface of the tire side portion in the device region is 0.1 mm to 1.0 mm.

A pneumatic tire as an embodiment of the present disclosure is
(3)
the pneumatic tire according to (2), above, wherein,
   at the outer surface of the tire side portion, a marking portion consisting of a protruding portion is provided on at least one side of the device region in the tire radial direction, and
the maximum protrusion of the outer surface of the tire side portion in the device region is less than maximum protrusion of the protruding portion of the marking portion.

### (Advantageous Effect)

According to the present disclosure, it is possible to provide a pneumatic tire capable of improving durability of a portion that protrudes to indicate the location of a communication device.

### BRIEF DESCRIPTION OF THE DRAWINGS

In the accompanying drawings:
FIG. 1 is a tire width direction cross-section diagram of a pneumatic tire as an embodiment of the present disclosure;
FIG. 2 is a plan view diagram of a communication device;
FIG. 3 is a perspective view diagram of the communication device;
FIG. 4 is a perspective view diagram of the communication device with a lid of an outer body removed;
FIG. 5 is an exploded perspective view diagram of the communication device;
FIG. 6 is a plan view diagram of a second antenna;
FIG. 7 is a partial cross-section diagram of the communication device;
FIG. 8 is a diagram illustrating an enlargement of a region in the vicinity of the communication device in FIG. 1;
FIG. 9 is a diagram illustrating an enlargement of a region in the vicinity of the communication device in a side surface view of the pneumatic tire illustrated in FIG. 1;
FIG. 10 is a cross-section diagram of a tire side portion at a position of line II-II in FIG. 9; and
FIG. 11 is a diagram illustrating variations in location of the communication device illustrated in FIG. 1.

### DETAILED DESCRIPTION

The following describes an example of an embodiment of the pneumatic tire according to the present disclosure, with reference to the drawings. In each drawing, the same structure is indicated by the same reference sign.

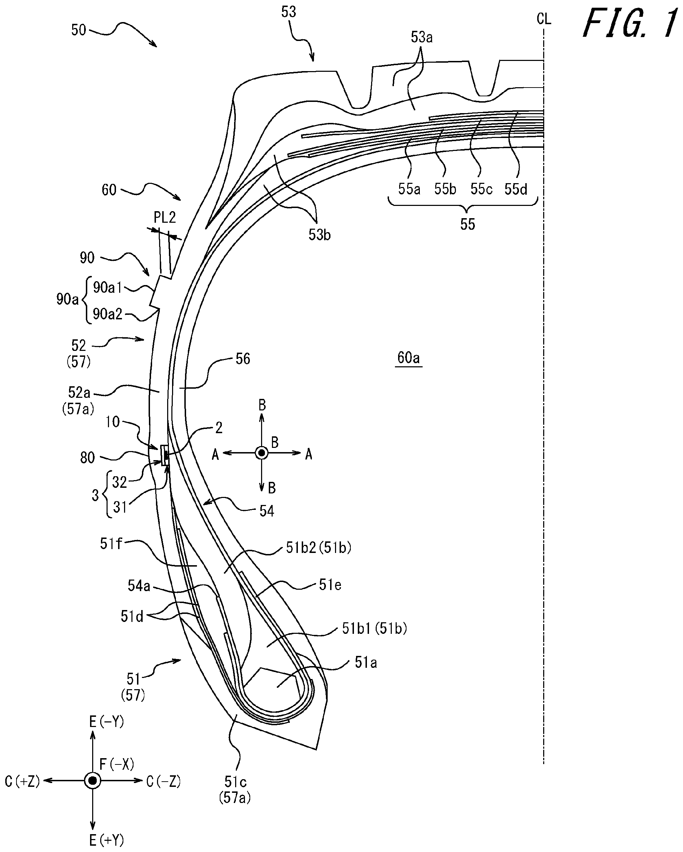

FIG. 1 is a tire width direction cross-section diagram of a pneumatic tire 50 as an embodiment of the pneumatic tire according to the present disclosure. As illustrated in FIG. 1, the pneumatic tire 50 includes a tire body 60 and a communication device 10. Hereinafter, for convenience of description, the pneumatic tire 50 is also referred to simply as "tire 50".

FIG. 1 illustrates only one half portion in the tire width direction C bounded by the tire equatorial plane CL of the tire 50, but the same structure is used for the other half portion, except for presence/absence of the communication device 10. However, the tire 50 may include asymmetric portions with the tire equatorial plane CL as a boundary.

The tire 50 illustrated in FIG. 1 is a tire for a truck or bus, but the tire 50 may be another heavy-duty tire or a tire for a passenger vehicle.

### [Tire body 60]

The internal structure of the tire body 60 is not particularly limited. The following configuration is an example. The tire body 60 includes a pair of tire side portions 57 and a tread portion 53 connected to the pair of tire side portions 57. Each tire side portion 57 consists of a bead portion 51 and a sidewall portion 52 connected to the bead portion 51.

In the bead portion 51, a bead core 51a is embedded, and a stiffener 51b is disposed outside the bead core 51a in the tire radial direction E. According to the present embodiment, a plurality (two, according to the present embodiment) of stiffeners 51b1, 51b2 of different hardness are included as the stiffener 51b. The stiffener 51b1, disposed inside in the tire radial direction E, is stiffer than the stiffener 51b2, disposed outside in the tire radial direction E.

Further, the tire body 60 includes a carcass 54 consisting of one or more carcass plies that toroidally extend between the pair of bead portions 51. The carcass 54 is wrapped around the bead cores 51a and turned up from inside in the tire width direction C outward, extending to a turn-up end 54a. The carcass plies may be a radial array of carcass cords covered with rubber. In the present example, the carcass cords consist of steel cords. The number of carcass plies is not particularly limited. The diameter of the carcass cords is not particularly limited, and may be 0.8 mm to 1.2 mm, for example.

A belt 55 consisting of one or more layers (four layers in the illustrated example) of belt plies 55a to 55d is disposed outside a crown portion of the carcass 54 in the tire radial direction E. Tread rubber 53a is disposed outside of the belt 55 in the tire radial direction E. A belt cord of the belt 55 is steel cord, according to the present example. The belt cord may be at an angle relative to the tire circumferential direction F, such as an inclination angle of 30° to 60°, for example. The number of belt layers and the belt width are not particularly limited. Further, as illustrated in FIG. 1, cushion rubber 53b may be disposed in the vicinity of an end portion of the belt 55.

In addition to the bead core 51a and the stiffener 51b described above, the bead portion 51 includes a rubber chafer 51c, a nylon chafer 51d, a wire chafer 51e, and hat rubber 51f. Further, from the bead portion 51 to the sidewall portion 52, side rubber 52a is disposed outside the carcass 54 in the tire width direction C.

The outer surface of the tire body 60 according to the present embodiment consists of the outer surface of the pair of tire side portions 57 and the outer surface of the tread portion 53. The outer surface of the tire side portion 57 is composed of side-covering rubber 57a. The outer surface of the tread portion 53 is composed of tread rubber 53a.

According to the present embodiment, the side-covering rubber 57a is composed of the rubber chafer 51c of the bead portion 51 and the side rubber 52a, which extends over the bead portion 51 and the sidewall portion 52.

Further, the inner surface of the tire body 60 according to the present embodiment faces a tire cavity 60a and is composed of an inner liner 56 that extends over the bead portion 51, the sidewall portion 52 and the tread portion 53.

### [Communication device 10]

The communication device 10 is embedded in the tire side portion 57 of the tire body 60. Specifically, the communication device 10 according to the present embodiment is disposed in the tire side portion 57 adjacent to the inside of the side-covering rubber 57a in the tire width direction C. More specifically, the communication device 10 is embedded in the tire side portion 57, at a location adjacent to the inside in the tire width direction C of the side rubber 52a as the side-covering rubber 57a, and between the side rubber 52a and the stiffener 51b2.

The communication device 10 may be configured for wireless communication with a defined device external to the tire body 60, and configuration of the communication device 10 is not particularly limited. An example of the communication device 10 is an RF tag. The communication device 10 according to the present embodiment is an RF tag. The RF tag as the communication device 10 is capable of wireless communication with a reader disposed outside the tire body 60. The RF tag may be, for example, a passive RF tag that operates by electrical power supplied by a reader disposed outside the tire body 60. Specifically, the RF tag as the communication device 10 is able receive, via an antenna of the RF tag, information transmitted by a radio wave or magnetic field from an antenna of a reader. Rectification (in the case of radio waves) or resonance (in the case of magnetic fields) generates electrical power in the antenna of the RF tag, and an IC chip including a storage, controller, and the like of the RF tag executes a defined operation. In the IC chip of the RF tag, the controller can, for example, read information in the storage that is nonvolatile memory, for example, and send the information back (transmit) to the reader from the antenna by a radio wave or a magnetic field. The antenna of the reader receives a radio wave or a magnetic field from the RF tag. A controller of the reader is able to retrieve the information stored in the storage of the IC chip of the RF tag by extraction from the received information.

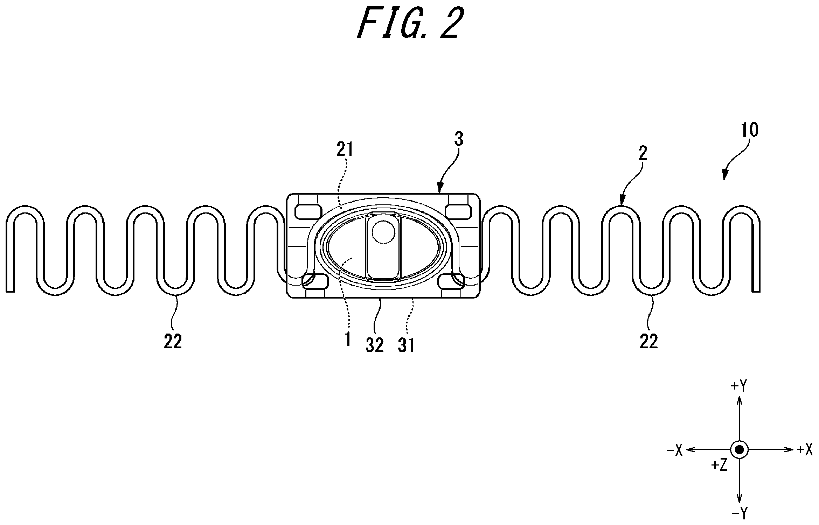

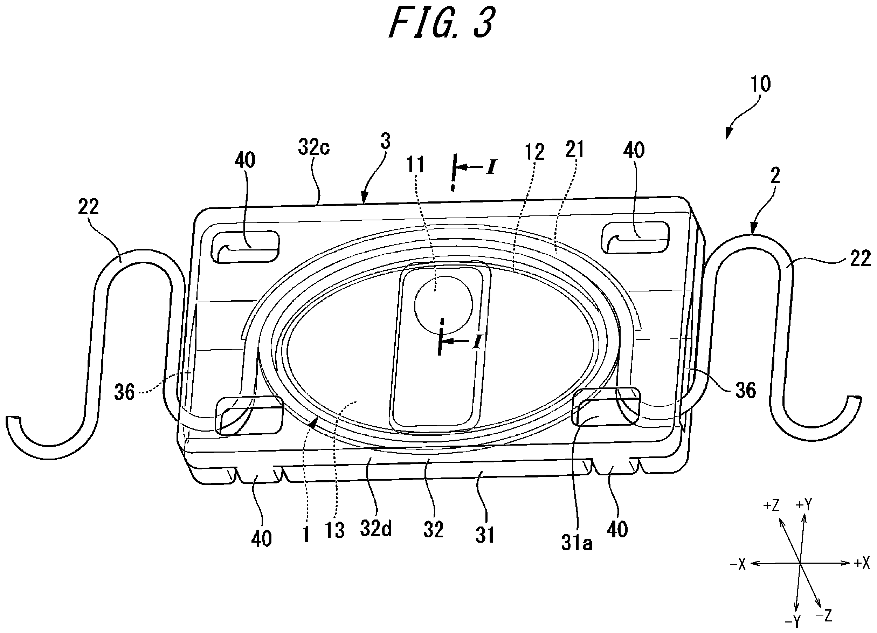

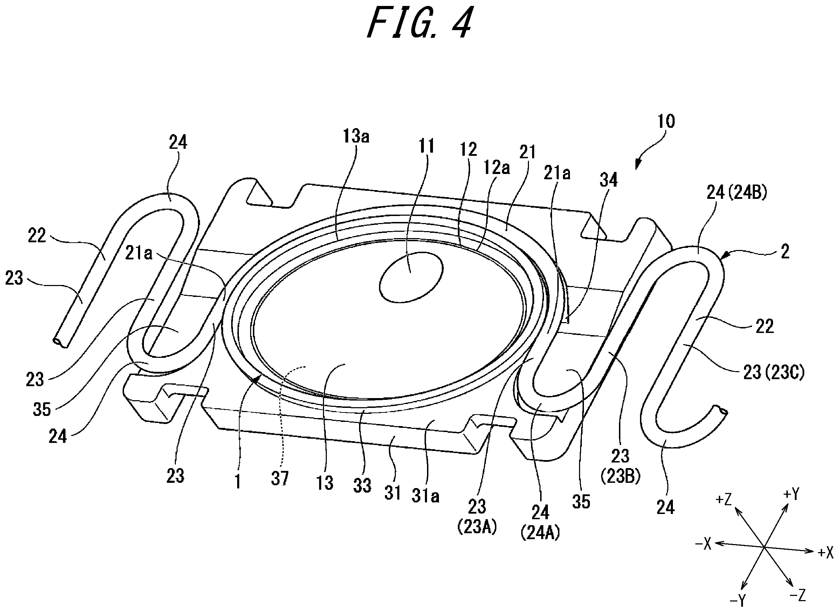

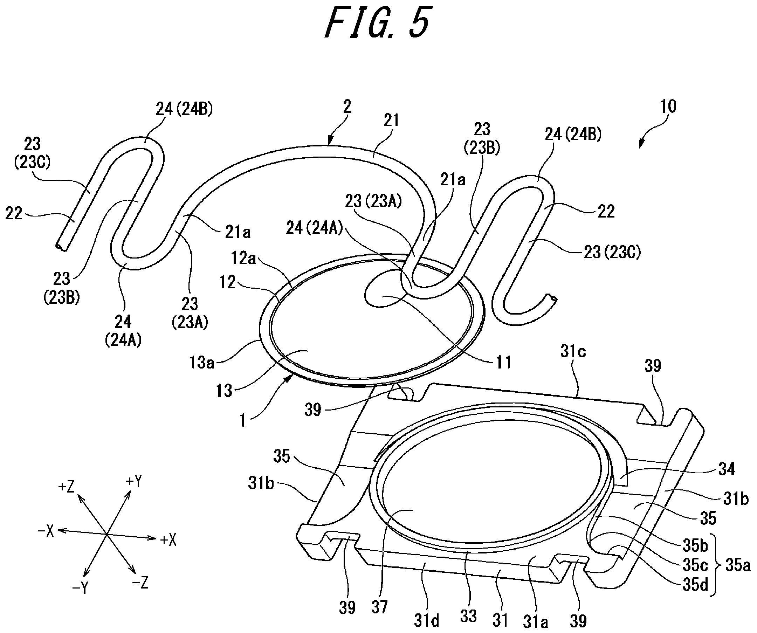

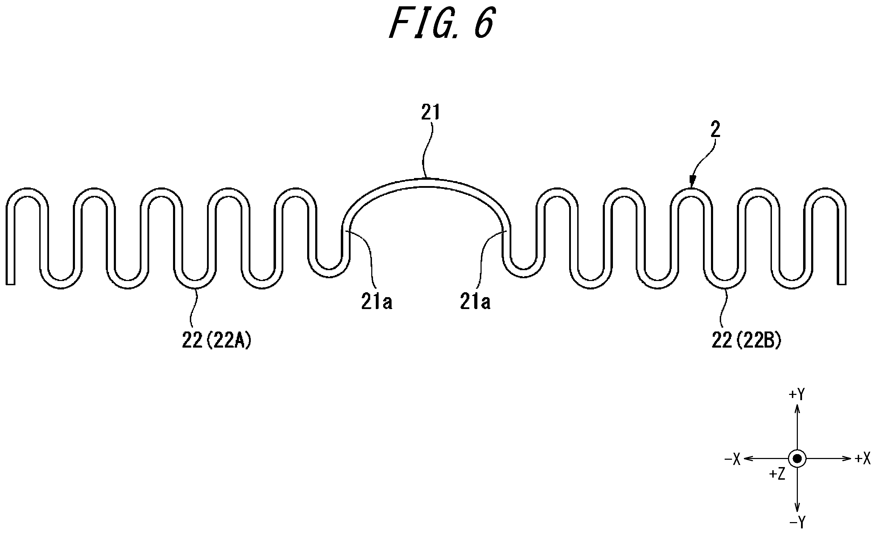

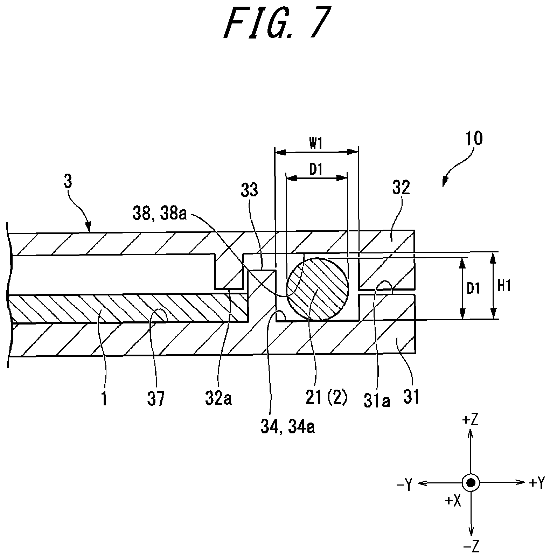

FIG. 2 is a plan view diagram of the communication device 10 according to the present embodiment. FIG. 3 is a perspective view diagram of the communication device 10. FIG. 4 is perspective view diagram of the communication device 10 with a lid 32 of an outer body 3 removed. FIG. 5 is an exploded perspective view diagram of the communication device 10. FIG. 6 is a plan view diagram of a second antenna 2. FIG. 7 is a partial cross-section diagram of the communication device 10. FIG. 7 is a cross-section view of I-I in FIG. 3.

As illustrated in FIG. 2 and FIG. 3, the communication device 10 includes a substrate 1, the second antenna 2, and the outer body 3. Hereinafter, for convenience of description, the longitudinal direction (left-right direction in FIG. 2) of a holding surface 31a (see FIG. 4) of the outer body 3 is referred to as the X direction. One direction along the X direction (to the right in FIG. 2) is referred to as the +X direction. The other direction along the X direction (to the left in FIG. 2) is referred to as the -X direction. The short direction of the holding surface 31a (see FIG. 4) of the outer body 3 is referred to as the Y direction. The Y direction is orthogonal to the X direction in the plane along the holding surface 31a. One direction along the Y direction (upward in FIG. 2) is referred to as the +Y direction. The other direction along the Y direction (downward in FIG. 2) is referred to as the -Y direction. The direction perpendicular to the holding surface 31a of the outer body 3 is referred to as the Z direction. The Z direction is perpendicular to the X and Y directions. A view from the Z direction is referred to as a planar view (see FIG. 2). The Z axis is the central axis along the Z direction.

As illustrated in FIG. 4, the substrate 1 includes an IC chip 11, a first antenna 12, and a base material 13.

The base material 13 is formed in a plate-like shape. The shape of the base material 13 in planar view is not particularly limited. Preferably at least a portion of a circumferential periphery 13a is a curved shape. The curved shape may be, for example, an elliptical arc, a circular arc, a higher-order curvilinear shape (for example, a quadratic curve), or the like. Examples of higher-order curvilinear shapes include a parabolic shape, a hyperbolic shape, and the like. The external shape of the base material 13 in planar view may be, for example, elliptical, circular, oval (a race-track shape), or the like. The external shape of the base material 13 in planar view is preferably noncircular. According to the present embodiment, the base material 13 has an elliptical shape. The base material 13 is oriented with the major axis length along the X direction. A glass epoxy resin substrate, a ceramic, a plastic film, or the like may be used as the base material 13.

The IC chip 11 is able to write and read information contactlessly via the first antenna 12 and the second antenna 2. The IC chip 11 is mounted on the base material 13.

The first antenna 12 is, for example, an electrically conductive layer formed on one side of the base material 13. The electrically conductive layer consists of, for example, an electrically conductive foil, a plating layer, an electrically conductive ink layer, or the like. The electrically conductive foil is, for example, a metal foil composed of copper, silver, gold, platinum, aluminum, or the like. The electrically conductive foil is formed into a defined shape by etching or the like. The plating layer is composed of a metal such as copper, silver, gold, platinum, aluminum, or the like. The electrically conductive ink layer is formed by printing or the like using electrically conductive ink. Electrically conductive ink contains electrically conductive particles formed of metal, carbon material, or the like.

The first antenna 12 is loop-shaped. The first antenna 12 has, for example, a curved shape following the circumferential periphery 13a of the base material 13. The first antenna 12 is formed as an elliptical loop. The first antenna 12 is electrically connected to the IC chip 11.

The second antenna 2 is a booster antenna. The second antenna 2 is, for example, linear. The second antenna 2 is formed of a metal, such as steel, stainless steel, copper, a copper alloy, or the like. The second antenna 2 may be formed of brass-plated steel wire, for example. The second antenna 2 is separate from the substrate 1. According to the present embodiment, the second antenna 2 has a flattened outline. In other words, the second antenna 2 having a flattened shape extends in a direction (in-plane direction of the XY plane according to the present embodiment) perpendicular to a thickness direction A (Z direction according to the present embodiment). Hereinafter, the direction (in-plane direction of the XY plane according to the present embodiment) perpendicular to the thickness direction A (the Z direction according to the present embodiment) is also simply described as "antenna in-plane direction B". According to the present embodiment, the second antenna 2 is a flat wire antenna consisting of a linear body extending in the antenna in-plane direction B, but the second antenna 2 is not limited to this configuration. The second antenna 2 may be, for example, a flat-plate antenna consisting of a plate-like body extending in the antenna in-plane direction B.

The second antenna 2 includes an electromagnetic field coupling portion 21 and a pair of extension portions 22. The electromagnetic field coupling portion 21 has a curved shape. Here, "curved shape" is a shape that bends smoothly without a sharply bent portion. As a curved shape, examples include an elliptical arc, a circular arc, a higher-order curvilinear shape (for example, a quadratic curve), and the like. As a higher-order curvilinear shape, examples include a parabolic shape, a hyperbolic shape, and the like. The electromagnetic field coupling portion 21 has a semi-elliptical shape. In detail, the electromagnetic field coupling portion 21 has a semi-elliptical shape, extending from one apex (apex intersecting the major axis) to the other apex (apex intersecting the major axis) of the elliptical shape.

The electromagnetic field coupling portion 21 is shaped to enclose at least a portion of the substrate 1 in planar view. The electromagnetic field coupling portion 21 encloses a range from one apex (apex intersecting the major axis) to the other apex (apex intersecting the major axis) of the substrate 1 having an elliptical shape (half circumference range on the +Y direction side).

The electromagnetic field coupling portion 21 has a curved shape (for example, an elliptical arc) following the circumferential periphery 12a of the first antenna 12 in planar view. The clearance distance between the electromagnetic field coupling portion 21 and the circumferential periphery 12a is approximately constant. The electromagnetic field coupling portion 21 is disposed outside the circumferential periphery 13a of the substrate 1 in planar view, in the vicinity of the circumferential periphery 13a. The electromagnetic field coupling portion 21 is shaped to follow the shape of the circumferential periphery 13a in planar view. The clearance distance between the electromagnetic field coupling portion 21 and the circumferential periphery 13a is approximately constant.

The electromagnetic field coupling portion 21 couples electromagnetic fields with the first antenna 12 contactlessly. Electromagnetic field coupling is, for example, one of electric field coupling or magnetic field coupling. The shape of a cross-section perpendicular to the longitudinal direction of the electromagnetic field coupling portion 21 is, for example, circular (see FIG. 7).

The extension portions 22 respectively extend from one and the other end portions 21a of the electromagnetic field coupling portion 21. As illustrated in FIG. 6, a first extension portion 22A, one of the pair of the extension portions 22, extends in the -X direction, while meandering, from the end portion 21a in the -X direction of the electromagnetic field coupling portion 21. A second extending portion 22B, the other of the pair of the extension portions 22, extends in the +X direction, while meandering, from the end portion 21a in the +X direction of the electromagnetic field coupling portion 21.

The planar view shape of the extension portions 22 is, for example, meandering, wavy-shaped, zigzag-shaped, or the like. The extension portions 22 have a meandering shape.

As illustrated in FIG. 5, the extension portions 22 each include a plurality of straight sections 23 and a plurality of turn-back sections 24. The straight sections 23 are straight along the Y direction. The plurality of the straight sections 23 are spaced apart in the X direction. The turn-back sections 24 connect end portions of adjacent straight sections 23. The turn-back sections 24 each have a curved shape (for example, an arc shape).

Of the plurality of the straight sections 23, the straight sections 23 closest to the electromagnetic field coupling portion 21 are referred to as "first straight sections 23A". Of the plurality of the straight sections 23, the straight sections 23 second closest to the electromagnetic field coupling portion 21 are referred to as "second straight sections 23B". Of the plurality of the straight sections 23, the straight sections 23 third closest to the electromagnetic field coupling portion 21 are referred to as "third straight sections 23C". The turn-back sections 24 connecting the first straight sections 23A and the second straight sections 23B are referred to as "first turn-back sections 24A". The turn-back sections 24 connecting the second straight sections 23B and the third straight sections 23C are referred to as "second turn-back sections 24B".

The first straight sections 23A extend in the -Y direction from the end portions 21A of the electromagnetic field coupling portion 21. The first turn-back portions 24A curve and extend from the -Y direction end portions of the first straight sections 23A to reach the -Y direction end portions of the second straight sections 23B. Of the extension portions 22, the first straight sections 23A and a portion of the first turn-back sections 24A are inside the outer body 3, while other portions of the extension portions 22 extend outside the outer body 3 (see FIG. 4).

The outer body 3 holds the substrate 1 and the second antenna 2 on the holding surface 31a.

More specifically, as illustrated in FIG. 3, according to the present embodiment, the outer body 3 includes a main body 31 that is plate-like and the lid 32 that is plate-like. One side of the main body 31 in the thickness direction is the holding surface 31a. In the communication device 10 according to the present embodiment, with the substrate 1 and the second antenna 2 held on the holding surface 31a of the main body 31, the lid 32 is attached to cover the holding surface 31a of the main body 31. As a result, the entirety of the substrate 1 and a portion of the second antenna 2 (according to the present embodiment, the entirety of the electromagnetic field coupling portion 21 and a portion of the pair of the extension portions 22) are contained between the holding surface 31a of the main body 31 and the lid 32.

The outer body 3 as a whole has a plate-like shape. The main body 31 and the lid 32 are, for example, formed of resin. As a resin, examples include polyamide resin such as nylon 6,6; polyester resin such as polyethylene terephthalate (PET); polyolefin resin such as polyethylene; fluoropolymer ethylene resin such as polyvinyl fluoride; vinyl polymer such as polyvinyl chloride; acrylic resin such as polymethyl methacrylate; and the like.

As illustrated in FIG. 5, the main body 31 has a rectangular shape in planar view. One side of the main body 31, the holding surface 31a, has a substrate holding recess 37 (substrate holding portion), an antenna holding groove 34, and a pair of side recesses 35. The substrate holding recess 37 is formed by a substrate holding protrusion 33. The substrate holding recess 37 is a recess surrounded by the substrate holding protrusion 33.

The substrate holding protrusion 33 is an annular rib projection. The substrate holding protrusion 33 is curved (for example, elliptical) following the circumferential periphery 13a of the substrate 1. The substrate holding protrusion 33 protrudes in the +Z direction from the holding surface 31a. The shape of a cross-section perpendicular to the longitudinal direction of the substrate holding protrusion 33 is, for example, rectangular. The substrate holding protrusion 33 is curved (for example, elliptical) following the circumferential periphery 12a of the first antenna 12 in planar view.

The substrate holding recess 37 holds the substrate 1. The substrate holding recess 37 has a shape (for example, elliptical) following the circumferential periphery 13a of the substrate 1. The internal dimensions (inner diameter) of the substrate holding recess 37 are approximately the same as the external dimensions (outer diameter) of the substrate 1 or slightly larger than the external dimensions (outer diameter) of the substrate 1. In planar view, the substrate holding recess 37 has a similar shape to the substrate 1.

When the substrate 1 and the substrate holding recess 37 are noncircular (for example, elliptical), the substrate 1 can be restricted from tilting around the Z-axis and the correct orientation of the substrate 1 can be maintained. Accordingly, the electromagnetic field coupling between the first antenna 12 and the electromagnetic field coupling portion 21 can be maintained.

The antenna holding groove 34 accommodates the electromagnetic field coupling portion 21 of the second antenna 2 (see FIG. 4 and FIG. 7). The antenna holding groove 34 is formed on the outside of the substrate holding protrusion 33, in close proximity to the substrate holding protrusion 33. The antenna holding groove 34 has a shape following the substrate holding protrusion 33 in planar view. The antenna holding groove 34 has a curved shape (for example, an elliptical arc) following the circumferential periphery 12a of the first antenna 12 in planar view. The antenna holding groove 34 has a curved shape (for example, an elliptical arc) following the circumferential periphery 13a of the substrate 1 in planar view. The antenna holding groove 34 is semi-elliptical in planar view. In detail, the antenna holding groove 34 has a semi-elliptical shape, extending from one apex (apex intersecting the major axis) to the other apex (apex intersecting the major axis) of the elliptical shape.

The antenna holding groove 34 is shaped to enclose at least a portion of the substrate 1 in planar view. The antenna holding groove 34 encloses a range from one apex (apex intersecting the major axis) to the other apex (apex intersecting the major axis) of the substrate 1 having an elliptical shape (half circumference range on the +Y direction side).

As illustrated in FIG. 7, a cross-section perpendicular to the longitudinal direction of the antenna holding groove 34 is, for example, rectangular. The width (internal dimension) W1 of the antenna holding groove 34 is larger than the outer diameter (external dimension) D1 of the electromagnetic field coupling portion 21. The difference between the width W1 and the outer diameter D1 may be, for example, 0.01 mm to 1 mm (preferably 0.05 mm to 0.2 mm). The width W1 of the antenna holding groove 34 is larger than the outer diameter D1 of the electromagnetic field coupling part 21, and therefore the electromagnetic field coupling portion 21 is accommodated in the antenna holding groove 34 in a displaceable state in the wire radial direction (for example, the Y direction). The "wire radial direction" is perpendicular to the longitudinal direction of the electromagnetic field coupling portion 21. The electromagnetic field coupling portion 21 is also displaceable in the longitudinal direction relative to the antenna holding groove 34.

The depth of the antenna holding groove 34 is defined so that the height (internal dimension) H1 from a bottom surface 34a of the antenna holding groove 34 to the lid 32 (top surface 38a) is larger than the outer diameter D1 of the electromagnetic field coupling portion 21. The difference between the height H1 and the outer diameter D1 may be, for example, 0.01 mm to 1 mm (preferably 0.05 mm to 0.2 mm). The height H1 of the antenna holding groove 34 is larger than the outer diameter D1 of the electromagnetic field coupling part 21, and therefore the electromagnetic field coupling portion 21 is accommodated in the antenna holding groove 34 in a displaceable state in the wire radial direction (for example, the Z direction).

As illustrated in FIG. 5, the side recesses 35 are formed on either side of the holding surface 31a. The side recesses 35 are formed in regions including side edges 31b of the main body 31 in the X direction. The inner circumferential periphery 35a of each of the side recesses 35 has a first straight section 35b along the Y direction, a curved section 35c, and a second straight section 35d along the X direction.

The first straight section 35b starts at an inner circumferential periphery end of the antenna holding groove 34 and extends in the -Y direction. The curved section 35c extends from an end of the first straight section 35b at a gradually decreasing inclination angle with respect to the X direction. The second straight section 35d is a portion from an end of the curved section 35c to the side edge 31b along the X direction.

As illustrated in FIG. 4, the side recesses 35 contain, in planar view, the first straight sections 23A and a portion of the first turn-back sections 24A of the second antenna 2. The first straight sections 23A are in close proximity to the first straight sections 35b (see FIG. 5). The first turn-back sections 24A are in close proximity to the curved sections 35c (see FIG. 5). Each of the side recesses 35 accommodates at least a portion of a defined length range of the second antenna 2 (the first straight section 23A and a portion of the first turn-back section 24A).

As illustrated in FIG. 3, the side recesses 35 extend far enough in the Y direction to form slit-shaped side end openings 36 in the side edges 31b extending in the Y direction (direction along the holding surface 31a). The second antenna 2 extends out of the outer body 3 through the side end openings 36. As illustrated in FIG. 5, two locking recesses 39 are formed at an end edge 31c of the main body 31 in the +Y direction, in different positions along the X direction. An end edge 31d of the main body 31 in the -Y direction also has two locking recesses 39, in different positions along the X direction.

As illustrated in FIG. 3, the lid 32 has a rectangular shape in planar view. The lid 32 is the same shape as the main body 31 and is installed opposite the holding surface 31a of the main body 31. The lid 32 is installed to overlap the holding surface 31a of the main body 31 in planar view.

As illustrated in FIG. 7, a facing surface 32a of the lid 32 is a surface facing the holding surface 31a of the main body 31. A positioning groove 38 is formed on the facing surface 32a. The positioning groove 38 is an annular groove. The shape of a cross-section perpendicular to the longitudinal direction of the positioning groove 38 is, for example, rectangular.

The positioning groove 38 has a curved shape (for example, elliptical) in accordance with the substrate holding protrusion 33 and the antenna holding groove 34. The positioning groove 38 has a width in planar view that covers both the substrate holding protrusion 33 and the antenna holding groove 34. A portion of a top surface 38a of the positioning groove 38 faces the bottom surface 34a of the antenna holding groove 34.

As illustrated in FIG. 3, two locking projections 40 are formed at an end edge 32c of the lid 32 in the +Y direction, in different positions along the X direction. An end edge 32d of the lid 32 in the -Y direction also has two locking projections 40 formed in different positions along the X direction.

Each of the locking projections 40 has a locking hook portion (not illustrated) formed at an end thereof. The locking projections 40 are inserted into the locking recesses 39 of the main body 31. The locking hook portions of the locking projections 40 lock onto the main body 31. This allows the lid 32 to be detachably coupled to the main body 31.

The outer body 3 is not fixed relative to the second antenna 2. That is, the outer body 3 is not fixed to the second antenna 2.

The communication device 10 may be installed in a molded article made of rubber or resin, for example. For example, the communication device 10 may be embedded in a molded article. The molded article is, for example, an elastic body, and is elastically deformable. When the molded article is stretched, bent, or otherwise deformed, the second antenna 2 may be subjected to external force. For example, a tensile force may act on the extension portions 22 in directions away from the outer body 3 along the X direction. The extension portions 22 may also be subjected to a force along the X direction in a direction towards the outer body 3. When the communication device 10 is installed in the tire body 60, as in the present embodiment, the communication device 10 may be installed enclosed in a fixing member made of a sheet of rubber (lamination rubber). This not only helps prevent damage to the communication device 10, but also allows the communication device 10 to be easily incorporated into the tire 50 with less risk of damage when the communication device 10 is incorporated into the tire after the communication device 10 is enclosed in a fixing member.

### [Effects of RFID tag]

In the communication device 10 according to the present embodiment, the electromagnetic field coupling portion 21 of the second antenna 2 is accommodated in the antenna holding groove 34 in a displaceable state in the wire radial direction (direction perpendicular to the longitudinal direction of the electromagnetic field coupling portion 21) (see FIG. 7). The electromagnetic field coupling portion 21 is displaceable, and therefore stress in the second antenna 2 can be relieved when an external force acts on the second antenna 2. Thus, damage to the second antenna 2 is less likely to occur. In contrast, if the second antenna were fixed to the outer body, then when an external force acts on the second antenna, stress would be concentrated at a base end portion (root portion) of the second antenna extending from the outer body, and damage could easily occur at this point.

The electromagnetic field coupling portion 21 of the second antenna 2 has a shape following the circumferential periphery 12a of the first antenna 12 of the substrate 1, allowing the electromagnetic field coupling portion 21 to be sufficiently electromagnetically coupled to the first antenna 12. The antenna holding groove 34 has a shape following the circumferential periphery 12a of the first antenna 12, and therefore the electromagnetic field coupling portion 21 of the second antenna 2 can be positioned alongside the first antenna 12. Accordingly, the electromagnetic field coupling portion 21 can be sufficiently electromagnetically coupled to the first antenna 12.

The electromagnetic field coupling portion 21 of the second antenna 2 has a curved shape (for example, a semi-elliptical shape), and therefore even when an external force acts on the second antenna 2, stress concentration is less likely to occur, compared to a rectangular shape. Thus, damage to the second antenna 2 is less likely to occur. In contrast, if the electromagnetic field coupling portion were rectangular in shape, an external force acting on the second antenna might cause stress to concentrate at a corner (bent portion), and damage could easily occur at this point.

The antenna holding groove 34 has a shape following the circumferential periphery 13a of the substrate 1, and therefore the electromagnetic field coupling portion 21 of the second antenna 2 can be positioned alongside the first antenna 12. Accordingly, the electromagnetic field coupling portion 21 can be sufficiently electromagnetically coupled to the first antenna 12.

The outer body 3 includes the main body 31 and the lid 32 that is overlaid on the holding surface 31a. The substrate holding recess 37 and the antenna holding groove 34 are formed on the holding surface 31a. Therefore, the lid 32 prevents the substrate 1 and the second antenna 2 from falling out of the main body 31. Therefore, the substrate 1 and the second antenna 2 can be stably held in the outer body 3.

In the communication device 10, the slit-shape side end openings 36 extending in the Y direction (along the holding surface 31a) are formed in the side edges 31b of the outer body 3. Accordingly, the second antenna 2 can change position in the Y direction relative to the outer body 3. Therefore, when an external force acts on the second antenna 2, stress is more easily relieved by displacement. Thus, damage to the second antenna 2 is less likely to occur.

For example, in the communication device 10, the circumferential periphery 13a of the substrate 1 and the circumferential periphery 12a of the first antenna 12 are curved over their entire circumference, but the substrate and antenna may have curved shapes over just a portion of their circumferential peripheries. The outer body 3 includes the main body 31 and the lid 32, but the configuration of the outer body is not particularly limited. For example, the outer body may be configured to not include a lid. The outer body is not limited to a plate-like shape, and may have another shape (for example, a block shape).

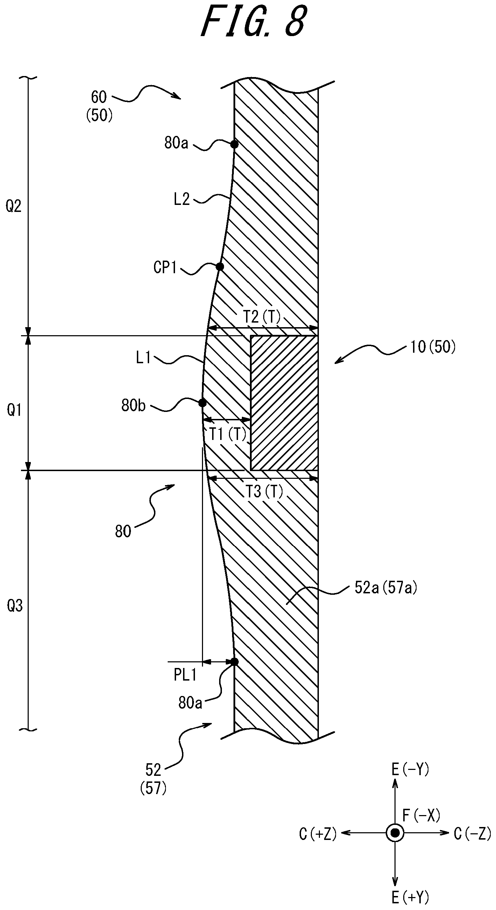

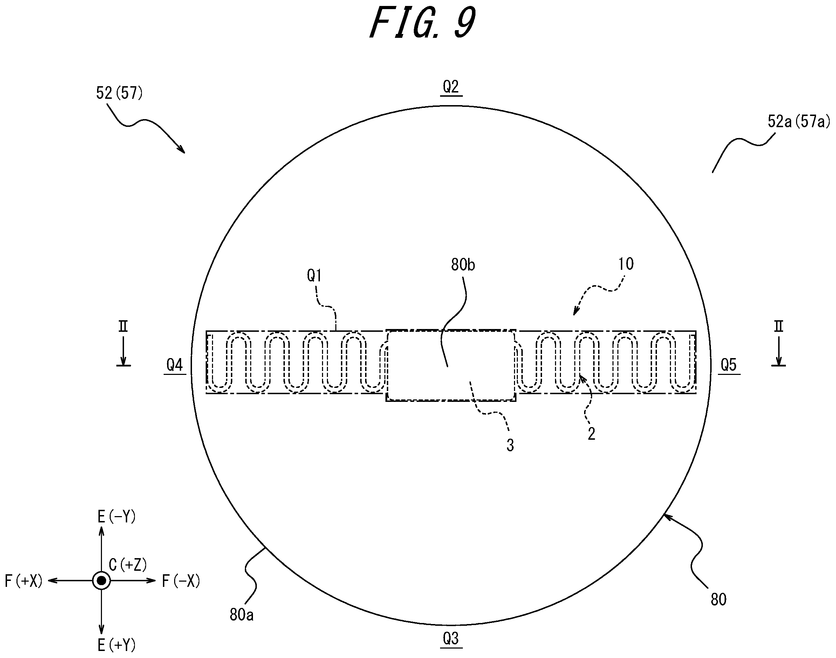

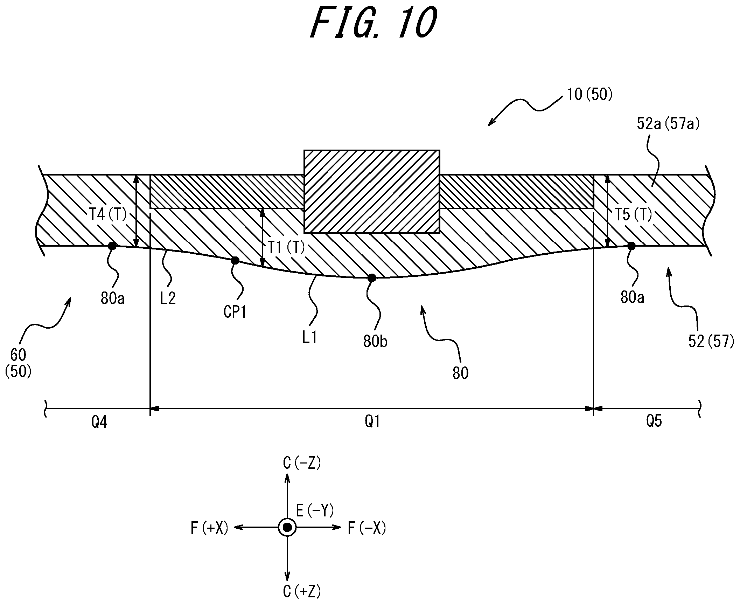

The features of the configuration of the side-covering rubber 57a in the vicinity of the communication device 10 are described below, with reference to FIG. 8 to FIG. 10. FIG. 8 is a diagram illustrating an enlargement of a region in the vicinity of the communication device 10 in FIG. 1. FIG. 9 is a diagram illustrating an enlargement in the vicinity of the communication device 10 of a side surface view of the tire 50 illustrated in FIG. 1, viewed from outside along the tire width direction C. In FIG. 9, the location of the communication device 10 is indicated by a dashed line. In other words, FIG. 9 is also a front view of a protrusion 80 of the present embodiment, described below, from the outside surface of the tire side portion 57. FIG. 10 is a cross-section view of II-II indicated in FIG. 9. In FIG. 8 and FIG. 10, for convenience of description, cross-section details of the communication device 10 are omitted. In FIG. 8 and FIG. 10, for convenience of description, members of the tire side portion 57 that are located inside along the tire width direction C from the communication device 10 (for example, the carcass 54 illustrated in FIG. 1) are omitted. As illustrated in FIG. 8 to FIG. 10, the communication device 10 according to the present embodiment is embedded in the tire side portion 57 so that the X direction is along the tire circumferential direction F. Further, as illustrated in FIG. 8 to FIG. 10, the communication device 10 according to the present embodiment is embedded in the tire side portion 57 so that the Y direction is along the tire radial direction E. Further, as illustrated in FIG. 8 to FIG. 10, the communication device 10 according to the present embodiment is embedded in the tire side portion 57 of the tire body 60 so that the Z direction is along the tire width direction C.

As illustrated in FIG. 8 and FIG. 10, the outer surface of the tire side portion 57 protrudes in the device region Q1. In other words, the side-covering rubber 57a, which constitutes the outer surface of the tire side portion 57, protrudes in the device region Q1. Here, the "device region Q1" means the region where the communication device 10 is located in the tire radial direction E and the tire circumferential direction F of the tire side portion 57. In other words, the device region Q1 according to the present embodiment means the region enclosed by the dot-dash line in FIG. 9. Thus, providing the protrusion 80 on the outer surface of the tire side portion 57 at a location that covers the communication device 10 makes it easier to identify the embedded location of the communication device 10 from the outside of the tire 50.

Further, the thickness T of the side-covering rubber 57a is thinner in the device region Q1 than around the device region Q1. The thickness T of the side-covering rubber 57a means the thickness in the tire width direction C. The following describes a specific example, with reference to FIG. 8 and FIG. 10. For convenience of description, in FIG. 8 and with respect to the device region Q1, a connected region to one side along the tire radial direction E (the outside along the tire radial direction E as an example in the present embodiment) is referred to as a first adjacent region Q2. Further, in FIG. 8 and with respect to the device region Q1, a connected region to the other side along the tire radial direction E (the inside along the tire radial direction E as an example in the present embodiment) is referred to as a second adjacent region Q3. Using these definitions, as illustrated in FIG. 8, the thickness T of the side-covering rubber 57a is thinner in the device region Q1 than at positions adjacent to the device region Q1 in the first adjacent region Q2 and the second adjacent region Q3. In other words, the thickness T1 of the side-covering rubber 57a in the device region Q1 is thinner than the thicknesses T2, T3 of the side-covering rubber 57a at positions adjacent to the device region Q1 in the first adjacent region Q2 and the second adjacent region Q3, which are adjacent to the device region Q1 in the tire radial direction E. Here, in a tire width direction cross-section view at the location of the communication device 10 (see FIG. 1 and FIG. 8), the "position adjacent to the device region Q1 in the first adjacent region Q2" means a position in the first adjacent region Q2 in a range of 1 mm or less in the tire radial direction E from the border with the device region Q1. Similarly, in a tire width direction cross-section view at the location of the communication device 10 (see FIG. 1 and FIG. 8), the "position adjacent to the device region Q1 in the second adjacent region Q3" means a position in the second adjacent region Q3 in a range of 1 mm or less in the tire radial direction E from the border with the device region Q1.

In FIG. 8, the thickness T of the side-covering rubber 57a is compared between the device region Q1 and positions adjacent to the device region Q1 in the first adjacent region Q2 and the second adjacent region Q3, which are connected to the device region Q1 in the tire radial direction E, but the same applies in the tire circumferential direction F. In FIG. 10, a region connected to one side of the device region Q1 in the tire circumferential direction F is a third adjacent region Q4. Further, in FIG. 10, a region connected to the other side of the device region Q1 in the tire circumferential direction F is a fourth adjacent region Q5. Using these definitions, as illustrated in FIG. 10, the thickness T of the side-covering rubber 57a is thinner in the device region Q1 than at positions adjacent to the device region Q1 in the third adjacent region Q4 and the fourth adjacent region Q5. In other words, the thickness T1 of the side-covering rubber 57a in the device region Q1 is thinner than the thicknesses T4, T5 of the side-covering rubber 57a at positions adjacent to the device region Q1 in the third adjacent region Q4 and the fourth adjacent region Q5, which are adjacent to the device region Q1 in the tire circumferential direction F. Here, in the tire circumferential direction cross-section view of the tire side portion 57 at the location of the communication device 10 (see FIG. 10), the "position adjacent to the device region Q1 in the third adjacent region Q4" means a position in the third adjacent region Q4 in a range of 1 mm or less in the tire circumferential direction F from the border with the device region Q1. Similarly, in the tire circumferential direction cross-section view of the tire side portion 57 at the location of the communication device 10 (see FIG. 10), the "position adjacent to the device region Q1 in the fourth adjacent region Q5" means a position in the fourth adjacent region Q5 in a range of 1 mm or less in the tire circumferential direction F from the border with the device region Q1.

As described above, the thickness T of the side-covering rubber 57a is thinner in the device region Q1 than around the device region Q1. Due to this configuration, it is possible to suppress concentration of strain on the protrusion 80, which is the portion that protrudes to indicate the position of the communication device 10, and to improve the durability of the protrusion 80.

The thickness T1 of the side-covering rubber 57a in the device region Q1 need not be uniform in the device region Q1. In such a case, the "thickness T1 of the side-covering rubber 57a in the device region Q1" means the maximum thickness of the side-covering rubber 57a in the device region Q1. Further, each of the thicknesses T2 to T5 of the side-covering rubber 57a along the tire radial direction E and the tire circumferential direction F with respect to the device region Q1 need not be uniform. In such a case, each of the "thicknesses T2 to T5 of the side-covering rubber 57a along the tire radial direction E and the tire circumferential direction F with respect to the device region Q1" means the minimum thickness of the side-covering rubber 57a along the tire radial direction E and the tire circumferential direction F around the device region Q1.

Further, the protrusion 80 according to the present embodiment is composed of a convex curved surface having a substantially circular base 80a when viewed from the front from the outer surface side of the tire side portion 57 (see FIG. 9), and a central portion when viewed from the front is an apex 80b. Therefore, as illustrated in FIG. 8, the protrusion 80 according to the present embodiment has a convex shape with the center portion along the tire radial direction E protruding the most in a tire width direction cross-section view at the position of the communication device 10. Further, as illustrated in FIG. 10, the protrusion 80 according to the present embodiment has a convex shape with the center portion along the tire circumferential direction F protruding the most in tire circumferential direction cross-section view of the tire side portion 57 at the position of the communication device 10. In particular, as in the present embodiment, the protrusion 80 preferably has a flared shape, changing from a convex curved surface to a concave curved surface from the apex 80b to the base 80a along the tire radial direction E and the tire circumferential direction F, respectively. In other words, in a tire width direction cross-section view at the position of the communication device 10 (see FIG. 8), from the apex 80b at the center of the tire radial direction E to the base 80a at both ends along the tire radial direction E, the protrusion 80 preferably has a flared shape that changes from a convex curve section L1 to a concave curve section L2 via an inflection point CP1. Similarly, in a tire circumferential direction cross-section view of the tire side portion 57 at the position of the communication device 10 (see FIG. 10), from the apex 80b at the center of the tire circumferential direction F to the base 80a at both ends along the tire circumferential direction F, the protrusion 80 preferably has a flared shape that changes from the convex curve section L1 to the concave curve section L2 via the inflection point CP1.

By making the protrusion 80 have such a flared shape, the base 80a of the protrusion 80 and the outer surface of the tire side portion 57 around the protrusion 80 can be smoothly continuous, and strain concentration at the base 80a of the protrusion 80 can be suppressed. Further, the portion of the protrusion 80 including the apex 80b is configured to have a convex curved surface, and therefore the apex 80b is less likely to have a tapered shape than when the same portion is configured to have a concave curved surface, and this makes it possible to suppress a tendency for strain to concentrate near the apex 80b due to various impacts from outside the tire 50. Thus, durability of the protrusion 80 can be increased by making the protrusion 80 have a flared shape that changes from a convex curved surface to a concave curved surface from the apex 80b to the base 80a.

It suffices that at least a portion of the protrusion 80 is disposed at a position on the outer surface of the tire side portion 57 that covers the communication device 10. Accordingly, the protrusion 80 may be disposed, for example, so as to cover the entirety of the communication device 10 on the outer surface of the tire side portion 57, and may be disposed so as to cover only a portion of the communication device 10 on the outer surface of the tire side portion 57. However, as illustrated in FIG. 8 to FIG. 10, the protrusion 80 preferably covers the entirety of the communication device 10 on the outer surface of the tire side portion 57. In other words, the base 80a, which is the circumferential periphery of the protrusion 80, is preferably outside of the device region Q1 in the front view of the protrusion 80 (see FIG. 9), viewed from the outer surface of the tire side portion 57. By positioning the base 80a outside of the device region Q1, the change in the thickness T of the side-covering rubber 57a at the boundary between the device region Q1 and the regions connected to the device region Q1 in the tire radial direction E and the tire circumferential direction F (according to the present embodiment, the first to fourth adjacent regions Q2 to Q5) can be made more gradual, compared to a configuration where the base 80a is within the device region Q1. This allows a rigidity step difference at the boundary to be reduced and suppresses the concentration of strain in the vicinity of the boundary. As a result, the durability of the tire 50 can be increased.

As illustrated in FIG. 8, the maximum protrusion PL1 of the outer surface of the tire side portion 57 in the device region Q1 is preferably from 0.1 mm to 1.0 mm. According to the present embodiment, as an example, the maximum protrusion PL1 is set at 0.5 mm. The maximum protrusion PL1 means the maximum distance between the apex 80b and the base 80a in a vertex normal line direction parallel to the normal line at the apex 80b of the protrusion 80. By setting the maximum protrusion PL1 to 0.1 mm or more, identifiability from outside the tire 50 can be secured. By setting the maximum protrusion PL1 to 1.0 mm or less, concentration of stress at the protrusion 80 can be suppressed. This can help prevent the protrusion 80 from becoming an initiation point for cracking due to strain concentration. From the viewpoint of identifiability from the outside of the tire 50, the maximum protrusion PL1 is more preferably 0.2 mm or more, and even more preferably 0.3 mm or more. From the viewpoint of suppressing strain concentration at the protrusion 80, the maximum protrusion PL1 is more preferably 0.8 mm or less, and even more preferably 0.7 mm or less.

Further, as illustrated in FIG. 1, on the outer surface of the tire side portion 57, a marking portion 90 consisting of a protruding portion 90a is disposed on at least on one side of the device region Q1 along the tire radial direction E (according to the present embodiment, outside the device region Q1 along the tire radial direction E). Here, examples of the marking portion 90 include a manufacturer corporate name, a logo of the manufacturing company, a trade name of the tire 50, and the like. The maximum protrusion PL1 (see FIG. 8) of the outer surface of the tire side portion 57 in the device region Q1 is smaller than the maximum protrusion PL2 (see FIG. 1) of the protruding portion 90a of the marking portion 90. The maximum protrusion PL2 means the maximum distance between an apex 90a1 of the protruding portion 90a and a base 90a2 of the protruding portion 90a in a vertex normal line direction parallel to the normal line at the apex 90a1 of the protruding portion 90a of the marking portion 90.

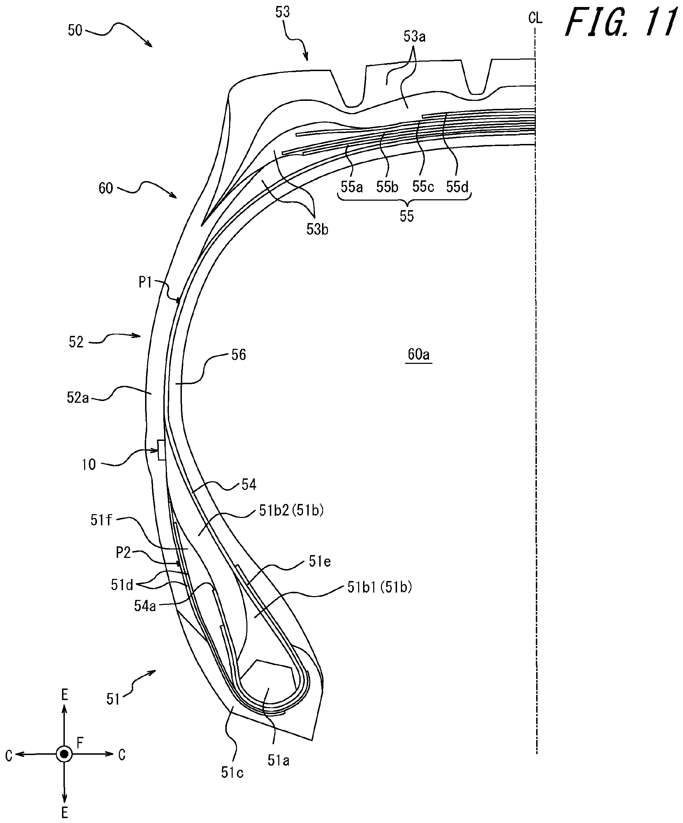

As mentioned above, in the tire 50 according to the present embodiment, the communication device 10 is embedded in the tire side portion 57 of the tire body 60. In particular, as illustrated in FIG. 1, the communication device 10 according to the present embodiment is disposed in the tire side portion 57, sandwiched between the stiffener 51b2 and the side rubber 52a as the side-covering rubber 57a adjacent to the stiffener 51b2, but the location of the communication device 10 may be any other position within the tire side portion 57. The following is an illustrative description of the possible location of the communication device 10 in a tire width direction cross-section view of the tire 50, with reference to FIG. 11. In FIG. 11, in addition to the location of the communication device 10 illustrated in FIG. 1 and FIG. 8 to FIG. 10 (indicated by a white rectangle in FIG. 11), examples of possible locations of the communication device 10 are indicated by black rectangles.

As mentioned above, the communication device 10 according to the present embodiment is an RF tag. Hereinafter, the communication device 10 is also referred to simply as an RF tag. As mentioned above, the RF tag includes the IC chip 11 and an antenna (according to the present embodiment, the first antenna 12 of the substrate 1 and the second antenna 2). The RF tag may be embedded, for example, in a rubber member of the side rubber 52a. Further, the RF tag is preferably not disposed at a boundary of members of different rigidity in the peripheral length direction, which is the direction along the outer surface of the tire in a tire width direction cross-section view. In this way, the RF tag is not disposed where strain is likely to be concentrated based on a rigidity step difference. This reduces the load applied to the RF tag. This can improve the durability of the RF tag. In the present example, the RF tag is preferably not disposed, for example, at the boundary between the turn-up end 54a of the carcass 54 and a member adjacent to the turn-up end 54a of the carcass 54 in a tire width direction cross-section. The number of RF tags is not particularly limited. The tire 50 may include only one RF tag, and may include two or more RF tags. Although an RF tag is illustrated here as an example of a communication device, the communication device may be something other than an RF tag.

As illustrated in FIG. 11, the RF tag may be disposed between the carcass 54 and the side rubber 52a (see reference sign "P1" in FIG. 11).

The RF tag may be disposed, for example, in the tire radial direction E, between a position of tire maximum width and a position of the tread surface (see reference sign "P1" in FIG. 11). In this way, communication with the RF tag from outside the tire 50 in the tire radial direction E can be improved compared to a configuration in which the RF tag is disposed further inward in the tire radial direction E than the position of the tire maximum width.

The RF tag may be disposed, for example, inward in the tire radial direction E from the position of the tire maximum width (see reference sign "P2" in FIG. 11). In this way, the RF tag is disposed in the vicinity of the bead portion 51 that has high rigidity. This reduces the load applied to the RF tag. This can improve the durability of the RF tag.

In particular, the RF tag is preferably disposed inward in the tire radial direction E from the position of the tire maximum width and outward in the tire radial direction E from the bead core 51a of the bead portion 51 (see reference sign "P2" in FIG. 11). In this way, the durability of the RF tag can be improved and communication between the RF tag and a reader is not likely to be impeded by the bead core 51a, increasing communication performance of the RF tag.

When the side rubber 52a includes a plurality of rubber members of the same or different types adjacent to each other in the tire radial direction E, the RF tag may be disposed sandwiched between the plurality of rubber members of the side rubber 52a.

The RF tag may be disposed sandwiched between the nylon chafer 51d and another member adjacent to the nylon chafer 51d outside in the tire width direction C. In this way, the position of the RF tag is less likely to change during tire deformation. This reduces the load applied to the RF tag during tire deformation. This can improve the durability of the RF tag.

The nylon chafer 51d may, for example, include a portion adjacent to the side rubber 52a, outside in the tire width direction C. In such a case, the RF tag may be disposed sandwiched between the nylon chafer 51d and the side rubber 52a (see reference sign "P2" in FIG. 11).

The pneumatic tire according to the present disclosure is not limited to the specific configurations illustrated by the embodiments and variations described above, and various variations, changes, and combinations are possible as long as they do not depart from the scope of the claims.

### [Contribution to United Nations-led Sustainable Development Goals (SDGs)]

The SDGs have been proposed with the aim of realizing a sustainable society. An embodiment of the present disclosure may be considered a technology that may contribute to "No. 12 Responsible Consumption and Production" and "No. 13 Climate Action".

### INDUSTRIAL APPLICABILITY

The present disclosure relates to a pneumatic tire.

### REFERENCE SIGNS LIST

1: substrate
2: second antenna
3: outer body
10: communication device
11: IC chip
12: first antenna
12a: circumferential periphery
13: base material
13a: circumferential periphery
21: electromagnetic field coupling portion
21a: electromagnetic field coupling portion end
22: extension portion
22A: first extension portion
22B: second extension portion
23: straight section
23A: first straight section
23B: second straight section
23C: third straight section
24: turn-back section
24A: first turn-back section
24B: second turn-back section
31: main body
31a: holding surface
31b: side edge
31c: end edge
31d: end edge
32: lid
32a: facing surface
32c: end edge
32d: end edge
33: substrate holding protrusion
34: antenna holding groove
34a: bottom surface
35: side recess
35a: circumferential periphery
35b: first straight section
35c: curved section
35d: second straight section
36: side end opening
37: substrate holding recess
38: positioning groove
38a: top surface
39: locking recess
40: locking protrusion
50: tire
51: bead portion
51a: bead core
51B, 51B1, 51B2: stiffener
51c: rubber chafer (example of side-covering rubber)
51d: nylon chafer
51e: wire chafer
51f: hat rubber
52: sidewall portion (example of tire side portion)
52a: side rubber (example of side-covering rubber)
53: tread portion
53a: tread rubber
53b: cushion rubber
54: carcass
54a: turn-up end
55: belt
55a to 55d: belt plies
56: inner liner
57: tire side portion
57a: side-covering rubber
60: tire body
80: protrusion
80a: base
80b: apex
90: marking portion
90a: protruding portion
90A1: apex
90b2: base
A: thickness direction of second antenna
B: antenna in-plane direction of second antenna
C: tire width direction
CL: tire equatorial plane
CP1: inflection point
D1: outer diameter of electromagnetic field coupling portion
E: tire radial direction
F: tire circumferential direction
H1: height from bottom surface of antenna holding groove to lid
L1: convex curve section
L2: concave curve section
PL1: maximum protrusion of outer surface of tire side portion in device region
PL2: maximum protrusion of protruding portion of marking portion
Q1: device region
Q2: first adjacent region
Q3: second adjacent region
Q4: third adjacent region
Q5: fourth adjacent region
T: thickness of side-covering rubber
T1: thickness of side-covering rubber in device region
T2, T3: thickness of side-covering rubber around device region in tire radial direction
T4, T5: thickness of side-covering rubber around device region in tire circumferential direction
W1: width of antenna holding groove
P1, P2: possible locations of communication device

## Claims

1. A pneumatic tire comprising:
a tire body including a tire side portion whose outer surface is composed of side-covering rubber; and
a communication device embedded in the tire side portion of the tire body, wherein
when a region in which the communication device is located in the tire radial direction and the tire circumferential direction of the tire side portion is defined as a device region,
the outer surface of the tire side portion protrudes in the device region, and
thickness of the side-covering rubber is thinner in the device region than around the device region.

2. The pneumatic tire according to claim 1, wherein maximum protrusion of the outer surface of the tire side portion in the device region is 0.1 mm to 1.0 mm.

3. The pneumatic tire according to claim 2, wherein,
at the outer surface of the tire side portion, a marking portion consisting of a protruding portion is provided on at least one side of the device region in the tire radial direction, and
the maximum protrusion of the outer surface of the tire side portion in the device region is less than maximum protrusion of the protruding portion of the marking portion.
